# EUROPÄISCHE PATENTSCHRIFT

(11) **EP 2 396 191 B1**
(45) Veröffentlichungstag und Bekanntmachung des Hinweises auf die Patenterteilung: **04.05.2016**
(21) Anmeldenummer: 10706969.2
(22) Anmeldetag: 11.02.2010
(51) Int. Cl.: B60N 2/06, B60N 2/42, F16H 1/16, F16H 25/20, F16H 55/22

(54) **SPINDELANTRIEB FÜR EINE SITZLÄNGSVERSTELLUNG EINES KRAFTFAHRZEUGSITZES**
SPINDLE DRIVE FOR LONGITUDINAL SEAT ADJUSTING OF AN AUTOMOTIVE VEHICLE SEAT
MÉCANISME D'ENTRAINEMENT À BROCHE POUR UN DISPOSITIF DE REGLAGE LONGITUDINAL DE SIEGES D' UN VÉHICULE AUTOMOBILE

(30) Priorität: 11.02.2009 DE 202009001847 U
(43) Veröffentlichungstag der Anmeldung: 21.12.2011
(60) Teilanmeldung: 12168048.2
(73) Patentinhaber: Brose Fahrzeugteile GmbH & Co. Kommanditgesellschaft, Coburg, Max-Brose-Straße 1 96450 Coburg (DE)
(72) Erfinder: BOSECKER, Stefan, 96515 Sonneberg (DE); SUCK, Wolfgang, 96450 Coburg (DE); LIPP, Florian, 96450 Coburg (DE); BAUERSACHS, Andrea, 96237 Ebersdorf (DE); EICHHORN, Sebastian, 98744 Unterweißbach (DE)
(74) Vertreter: Maikowski & Ninnemann
(86) Internationale Anmeldenummer: PCT/EP2010/051729
(87) Internationale Veröffentlichungsnummer: WO 2010/092120

(56) Entgegenhaltungen:
- EP-A1- 0 311 478
- EP-A1- 1 330 013
- EP-A1- 1 829 735
- WO-A1-2006/034711
- DE-A1- 3 919 378
- DE-A1- 10 353 245
- DE-A1- 19 911 432
- DE-A1- 19 942 973
- FR-A1- 2 721 668
- FR-A1- 2 832 362
- US-A- 4 966 045
- US-A1- 2005 269 478
- US-A1- 2006 060 017

## Beschreibung

Die Erfindung bezieht sich auf einen Spindelantrieb für eine Sitzlängsverstellung eines Kraftfahrzeugsitzes gemäß dem Oberbegriff des Anspruchs 1.

Aus der DE 10 2006 058 361 A1 ist ein in Fig. 1 dargestellter Spindelantrieb bekannt, der eine Spindel 1 aufweist, die mit einem Verstellgetriebe 2 in Eingriff steht, das mit der Verstellschiene der Sitzlängsverstellung, beispielsweise einer gleitend in einer mit dem Kraftfahrzeugboden verbundenen Unterschiene gelagerten Oberschiene, für den Kraftfahrzeugsitz verbunden ist. Zur Befestigung des Verstellgetriebes 2 dient ein Haltewinkel 5, vorzugsweise aus Metall und insbesondere aus Stahl, der eine Basis 50 und zwei seitliche Schenkel 51, 52 aufweist, an denen jeweils Durchgangsöffnungen 53, 54 für die Spindel 1 angeordnet sind. Von den beiden seitlichen Schenkeln 51, 52 des Haltewinkels 5, zwischen denen und der Basis 50 das Verstellgetriebe 2 angeordnet ist, steht jeweils ein Befestigungsflansch 55, 56 mit einer Befestigungsstelle in Form einer Befestigungsöffnung 57, 58 ab, über die der Haltewinkel 5 an der Verstellschiene befestigt ist.

Das Verstellgetriebe 2 weist ein Getriebegehäuse 6 auf, in dem eine Spindelmutter 3 und eine Antriebsschnecke 4 angeordnet und gelagert sind. Die Spindelmutter 3 enthält eine mit dem Außengewinde 10 der Spindel 1 in Eingriff stehende Innenverzahnung sowie eine Außenverzahnung, die mit der Antriebsschnecke 4 kämmt. Im Betrieb des Spindelantriebs wird die Spindelmutter 3 über die mit einer Antriebseinrichtung verbundene Antriebsschnecke 4 in eine Drehbewegung versetzt, die durch den Eingriff der Innenverzahnung der Spindelmutter 3 in das Außengewinde 10 der Spindel 1 in eine Längsbewegung des Verstellgetriebes 2 relativ zur Spindel 1 übertragen wird, so dass das Verstellgetriebe 2 relativ zu der orts- und drehfest mit dem Fahrzeug verbundenen Spindel 1 verstellt wird und die mit dem Verstellgetriebe 2 verbundene Verstellschiene der Sitzlängsverstellung des Kraftfahrzeugsitzes und damit den Kraftfahrzeugsitz in Längsrichtung der Spindel 1 relativ zum Kraftfahrzeugboden verstellt.

Um eine sichere und feste Halterung der Oberschiene zu gewährleisten, ist das Verstellgetriebe 2 derart dimensioniert, dass es die von der Verstellschiene bei einer normalen Verstellbewegung des Kraftfahrzeugsitzes eingeleiteten Kräfte auffangen und abstützen kann. In einem Crashfall, insbesondere bei einem Front- oder Heckcrash des Kraftfahrzeugs, muss aber sichergestellt sein, dass das Verstellgetriebe 2 nicht in Längsrichtung der Spindel 1 durchrutscht, da dies zu einer unerwünschten Beschleunigung des mit der Verstellschiene der Sitzlängsverstellung verbundenen Kraftfahrzeugsitzes und damit zu einem erhöhten Verletzungsrisiko für einen auf dem Kraftfahrzeugsitz befindlichen Kraftfahrzeuginsassen führen würde.

Um eine einfache, leichte und kostengünstige Bauform des Verstellgetriebes 2 zu ermöglichen, sind das Getriebegehäuse 6 und die Spindelmutter 3 vorzugsweise aus Kunststoff ausgebildet, wobei die Spindelmutter aus Kunststoff mit ihrer Kunststoffverzahnung auch zur Geräuschminimierung bei einer Verstellbewegung beiträgt.

Zur Erhöhung der Festigkeit und Stabilität des Verstellgetriebes 2 ist das Verstellgetriebe 2 von dem Haltewinkel 5 aus Metall eingefasst und über den Haltewinkel 5 mit der Verstellschiene der Sitzlängsverstellung verbunden, so dass im Crashfall der Haltewinkel 5 durch die Spindelmutter 3 und das Getriebegehäuse 6 verformt wird, bis sich in Abhängigkeit davon, ob ein Front- oder Heckcrash auftritt, die jeweilige Durchgangsöffnung 53, 54 des Haltewinkels 5 in die Gewindegänge des Außengewindes 10 der Spindel 1 verkrallt und dadurch den mit dem Verstellgetriebe 2 über die Verstellschiene der Sitzlängsverstellung verbundenen Kraftfahrzeugsitz im Crashfall gegen eine unerwünschte Längsverschiebung sichert.

Da sich die Anforderungen an die Crashfestigkeit des Spindelantriebs auch auf extreme klimatische Bedingungen mit Temperaturen in einer Bandbreite von -30°C bis +80°C beziehen, die bei der aus Gewichts- und Herstellungsgründen aus Kunststoff bestehenden Spindelmutter 3 zu einem erhöhten Fließen oder zu einer Versprödung des Kunststoffs führen können, besteht die Gefahr, dass die im Crashfall wirkenden Kräfte nicht mehr ausreichend von der Spindelmutter 3 über das Getriebegehäuse 6 zum Haltewinkel 5 übertragen werden, um diesen für die Verkrallung in der Spindel 1 zu verformen, so dass die Gefahr einer Nichtverriegelung der Sitzlängsverstellung des Kraftfahrzeugsitzes im Crashfall zumindest bei extremen Temperaturen besteht.

Bei einem aus der EP 1 829 735 A1 bekannten Spindelantrieb ist an eine Spindelmutter eine Stützscheibe einstückig angeformt, über die auf die Spindelmutter im Betrieb wirkende Kräfte abgestützt werden können.

Die US 4,966,045 offenbart einen Spindelantrieb mit einer drehbar gelagerten Spindel, mit der eine feststehende Spindelmutter in Eingriff steht. An einen ersten Teil der Spindelmutter schließt ein zweiter Teil der Spindelmutter an, der mit dem ersten Teil über Stifte verbunden ist.

Bei einem aus der FR 0 311 478 A1 bekannten Spindelantrieb ist eine zweiteilige Spindelmutter in einem Gehäuse angeordnet und steht mit einer Spindel in Gewindeeingriff.

Aus der FR 2 832 362 A1 ist ein Spindelantrieb bekannt, bei dem eine Spindelmutter über einen Haltebügel feststehend gehalten wird. Die Spindelmutter steht mit einer Spindel in Gewindereingriff, die über eine Antriebsvorrichtung in eine Drehbewegung versetzbar ist, so dass bei einer Drehung der Spindel die Spindelmutter an der Spindel abrollt und somit längs entlang der Spindel verstellt werden kann.

Bei einem aus der WO 2006/034711 A1 bekannten Spindelantrieb ist eine Spindel drehbar gelagert und steht mit einer feststehenden Mutter in Eingriff. Eine Sicherheitsmutter wird vollständig von der Spindelmutter umgriffen und stellt keine großflächige axiale Abstützung bereit.

Bei einem aus der DE 39 19 378 A1 bekannten Spindelantrieb ist eine festehend an einer Führungsschiene festgelegte Spindelmutter mehrteilig ausgebildet.

Bei einer aus der DE 199 11 432 A1 bekannten Spindelmutter ist an einer Verzahnung ein Kraftübertragungsbeeich vorgesehen, über den die Spindelmutter mit einer Gegenverzahnung in Eingriff steht.

Die EP 1 330 013 A1 offenbart einen linearen Spindeklverstellantrieb, bei dem eine Spindelmutter aus Halbschalen aufgebaut ist.

Der vorliegenden Erfindung liegt daher die Aufgabenstellung zugrunde, einen Spindelantrieb der eingangs genannten Art zu schaffen, dessen Stabilität und Crashfestigkeit unter Beibehaltung einer einfachen, leichten, durch die Kunststoffverzahnung geräuschoptimierten und kostengünstigen Bauform des Verstellgetriebes auch bei extremen Temperaturen gewährleistet sind.

Diese Aufgabe wird erfindungsgemäß durch die Merkmale des Anspruchs 1 gelöst.

Die erfindungsgemäße Lösung gewährleistet bei einfacher, leichter, geräuschoptimierter und kostengünstiger Bauform des Verstellgetriebes eine hohe Stabilität und Crashfestigkeit des Spindelantriebs zur Sitzlängsverstellung auch bei extremen Temperaturen.

Die Aufteilung der Hybridspindelmutter in einen Funktionsteil und einen Festigkeitsteil ermöglicht es, beide Teile der Hybridspindelmutter bezüglich der ihnen zugewiesenen Funktion sowohl hinsichtlich der Bauform als auch hinsichtlich der Materialauswahl zu optimieren und dadurch den Vorteil einer einfachen, leichten, und kostengünstigen Bauweise mit einer über einen sehr großen Temperaturbereich ausreichenden Stabilität und insbesondere Crashfestigkeit des Spindelantriebs zu versehen.

Dementsprechend bestehen nach einem Merkmal der Erfindung das Funktionsteil und das mindestens eine Festigkeitsteil der Hybridspindelmutter aus unterschiedlichen, den jeweiligen Festigkeitsanforderungen angepassten Werkstoffen oder weisen unterschiedliche, den jeweiligen Festigkeitsanforderungen angepasste Werkstoffanteile auf, wobei insbesondere das Funktionsteil in einem mittleren Bereich der Hybridspindelmutter angeordnet ist und im Kraftfluss zwischen der Antriebsschnecke und der Spindel die Außenund Innenverzahnung der Hybridspindelmutter enthält und das mindestens eine Festigkeitsteil eine Stirnseite der Hybridspindelmutter bildet und beispielsweise aus mindestens einer die Stirnseite der Hybridspindelmutter bildenden Buchse besteht.

Die aus einem Funktionsteil und mindestens einem Festigkeitsteil aus unterschiedlichen Werkstoffen bestehende Hybridspindelmutter wird somit im mittleren Funktionsteil vollständig oder zumindest im Verzahnungsbereich der Außen- und Innenverzahnung aus Kunststoff hergestellt, während die axial äußeren, den Festigkeitsteil bildenden Bereiche der Hybridspindelmutter mit Buchsen versehen sind, die eine höhere Festigkeit durch eine entsprechende Materialauswahl oder Materialzusammensetzung aufweisen als das Funktionsteil der Hybridspindelmutter, so dass die Übertragung von Crashkräften auf das Getriebegehäuse oder den Haltewinkel gewährleistet ist, damit diese sich im Crashfall in das Außengewinde der Spindel verkrallen können.

Wird nur eine einseitige Crashfestigkeit auch bei extremen Temperaturen gefordert, so kann das Festigkeitsteil der Hybridspindelmutter an nur einer, dem jeweiligen Crashfall zugeordneten Seite im axial äußeren Bereich der Hybridspindelmutter vorgesehen werden, während der Bereich auf der anderen Seite der Hybridspindelmutter aus einem Material geringerer Festigkeit oder aus dem Material des Funktionsteils der Hybridspindelmutter hergestellt wird.

In bevorzugter Ausführungsform weist das mindestens eine Festigkeitsteil, beispielsweise eine Buchse der Hybridspindelmutter eine Innenverzahnung auf, deren Zahnflanken von den Zahnflanken des Außengewindes der Spindel derart beabstandet sind, dass im Normalbetrieb nur die Innenverzahnung des Funktionsteils mit dem Außengewinde der Spindel in Eingriff ist.

Die das Festigkeitsteil bildende Buchse der Hybridspindelmutter ersetzt die Funktion einer zusätzlichen Anlaufscheibe am stirnseitigen Ende der Hybridspindelmutter, während die Ausbildung eines großen Zahnspiels zwischen der Innenverzahnung der Buchse und dem Außengewinde der Spindel sicherstellt, dass die Innenverzahnung der Buchse im Normalbetrieb nicht in das Außengewinde der Spindel eingreift, also "leerläuft". Erst im Crashfall, wenn sich die Zahnflanken der Innenverzahnung aus Kunststoff des Funktionsteils der Hybridspindelmutter verformen, greift die Innenverzahnung des Festigkeitsteils bzw. der Buchse in das Außengewinde der Spindel ein und gewährleistet damit, dass die Crashkraft von der Verstellschiene der Sitzlängsverstellung des Kraftfahrzeugsitzes über das Getriebegehäuse bzw. den Haltewinkel und die den Festigkeitsteil der Hybridspindelmutter bildende Buchse aus Metall in die feststehende Spindel abgeleitet wird.

Alternativ ist das mindestens eine Festigkeitsteil axial sowohl gegenüber Lagerböcken eines Getriebegehäuses des Verstellgetriebes und/oder seitlichen Schenkeln des Haltewinkels als auch gegenüber einer axialen Stirnseite des Funktionsteils beabstandet und weist eine Innenverzahnung auf, die mit dem Außengewinde der Spindel kämmt.

In dieser alternativen Ausführungsform kämmt die Innenverzahnung des mindestens einen Festigkeitsteils zwar mit dem Außengewinde der Spindel, aufgrund des axialen Abstandes der einander gegenüberstehenden Stirnseiten des Funktionsteils und des mindestens einen Festigkeitsteils tritt jedoch keine axiale Belastung des Festigkeitsteils auf, d. h., im Normalbetrieb wird keine axiale Kraft in das Festigkeitsteil eingeleitet, so dass das Festigkeitsteil keinen zusätzlichen Reibwiderstand in Verstellrichtung bewirkt, der den Wirkungsgrad oder die zu übertragende Kraft herabsetzen könnte. Wenn sich im Crashfall die Zahnflanken der vorzugsweise aus Kunststoff bestehenden Innenverzahnung des Funktionsteils der Hybridspindelmutter verformen, wird die Crashkraft von der Verstellschiene der Sitzlängsverstellung des Kraftfahrzeugsitzes über das Getriebegehäuse des Verstellgetriebes bzw. den Haltewinkel in das mindestens eine Festigkeitsteil aus hochfestem Werkstoff und von diesem über die in das Außengewinde der Spindel eingreifende Innenverzahnung des Festigkeitsteil in die feststehende Spindel abgeleitet.

Um sicherzustellen, dass im Normalbetrieb das mindestens eine Festigkeitsteil die Verstellbewegung der Hybridspindelmutter nicht blockiert, weist das Funktionsteil in den beiden vorstehend genannten Ausführungsformen an der dem Festigkeitsteil zugewandten Stirnseite mindestens einen in Umfangsrichtung wirksamen Mitnehmer auf, der mit einem an der dem Funktionsteil zugewandten Stirnseite des Festigkeitsteils angeordneten Mitnehmer korrespondiert, derart, dass bei einer über die Antriebsschnecke eingeleiteten Drehbewegung des Funktionsteils das Festigkeitsteil in der jeweiligen Drehrichtung mitgenommen wird.

Dadurch wird sichergestellt, dass in der ersten Ausführungsform die nicht in das Außengewinde der Spindel eingreifende Innenverzahnung des Festigkeitsteils ohne Kraftübertragung leer läuft und im zweiten Ausführungsbeispiel, dass die mit dem Außengewinde der Spindel kämmende Innenverzahnung des Festigkeitsteils keine axialen Kräfte überträgt und somit kein Reibwiderstand zwischen dem Festigkeitsteil und der Spindel auftritt, der zu einer Herabsetzung des Wirkungsgrades und Wirksamkeit der Verstellkraft führen würde.

Vorzugsweise sind als Mitnehmer mehrere am Umfang der einander gegenüberstehenden Stirnseiten des Festigkeitsteils und Funktionsteils nach Art einer Verzahnung ausgebildete, ineinander greifende Vorsprünge und Nuten als Mitnehmer vorgesehen, die insbesondere nach Art einer Schwalbenschwanzführung ausgebildet sind.

Die Ausgestaltung der Mitnehmer als mehrere, vorzugsweise gleichmäßig am Umfang der einander gegenüberstehenden Stirnseiten des Festigkeitsteils und Funktionsteils nach Art einer Verzahnung ausgebildete, ineinander greifende Vorsprünge und Nuten gewährleistet eine gleichförmige und am Umfang gleichmäßig verteilte Mitnahmekraft, so dass kein Verkanten oder Verklemmen des mindestens einen Festigkeitsteils auftreten kann. Die Ausbildung der Vorsprünge und Nuten nach Art einer Schwalbenschwanzführung mit keilförmigen Vorsprüngen und entsprechend keilförmigen Nuten ermöglicht eine einfache Montage und insbesondere bei der Anordnung des Festigkeitsteils mit axialem Abstand gegenüber der Stirnseite des Funktionsteils bzw. des Getriebegehäuses oder des Haltewinkels die Möglichkeit eines Zusammensteckens des Festigkeitsteils und Funktionsteils vor dem Einfügen der Spindel in die miteinander fluchtenden Gewindebohrungen des Festigkeitsteils und des Funktionsteils.

Das Funktionsteil der Hybridspindelmutter besteht aus einem hohlzylindrischen Grundkörper mit an mindestens einer Stirnseite angeordneter zylinderringförmiger Vertiefung, in die ein zylinderringförmiger Vorsprung der als Festigkeitsteil ausgebildeten Buchse der Hybridspindelmutter eingreift, wobei sich an den zylinderringförmigen Vorsprung der Buchse ein sich an die Stirnseite des hohlzylindrischen Grundkörpers des Funktionsteils anlegender Flansch, an den Flansch ein zylinderringförmiger Absatz anschließen und eine Stirnseite des als hohlzylindrischer Grundkörper ausgebildeten Funktionsteils einen radial mit dem Kopfkreis der Außenverzahnung des Funktionsteils bündig abschließenden Flansch aufweist

Die erfindungsgemäße Aufteilung der Hybridspindelmutter in einen Funktionsteil und einen Festigkeitsteil kann auf unterschiedliche Weise realisiert werden. In einer ersten Ausführungsform ist die mindestens eine als Festigkeitsteil ausgebildete Buchse mit dem hohlzylindrischen Grundkörper des Funktionsteils durch Kleben oder Laserschweißen verbunden, wobei das Festigkeitsteil der Hybridspindelmutter einen hartmetallischen Werkstoff, insbesondere Stahl, enthält oder aus einem hartmetallischen Werkstoff besteht und das Funktionsteil zumindest im Eingriffsbereich der Innen- und Außenverzahnungen aus Kunststoff besteht oder das Festigkeitsteil als Insertteil aus einem mit Kunststoff umspritzten Hartmetallkörper ausgebildet ist und das Funktionsteil aus einem mit Kunststoff umspritzten metallischen Werkstoff oder aus Kunststoff besteht. Alternativ kann das Festigkeitsteil aus einem Kunststoff hoher Festigkeit und das Funktionsteil aus einem Kunststoff geringerer Festigkeit bestehen.

In einer zweiten Ausführungsform besteht das Funktionsteil aus Kunststoff, der an die mindestens eine als Festigkeitsteil ausgebildete Buchse angespritzt ist.

In einer dritten Ausführungsform besteht der Grundkörper der Hybridspindelmutter aus einem hohlzylindrischen Körper aus einem metallischen Werkstoff, insbesondere aus Stahl, mit schmalen Zahnflanken als Innengewinde, der innen und zumindest im Bereich des Außengewindes des Funktionsteils mit Kunststoff umspritzt ist.

In einer vierten Ausführungsform besteht der Grundkörper der Hybridspindelmutter aus zwei hohlzylindrischen Halbschalen aus Metall, die im Bereich der Stirnseiten von zwei als Festigkeitsteil dienenden Hülsen umschlossen sind, während ein die Innen- und Außenverzahnung der Hybridspindelmutter bildender Kunststoff auf die Innen- und Außenfläche der hohlzylindrischen Halbschalen aufgespritzt ist.

Anhand von in der Zeichnung dargestellten Ausführungsbeispielen sollen die wesentlichen Merkmale der Erfindung und deren verschiedenartige Realisierbarkeit näher erläutert werden. Es zeigen:
- Fig. 1: eine perspektivische Darstellung eines Spindelgetriebes mit einer Spindel, einem Verstellgetriebe und einem Haltewinkel;
- Fig. 2: eine Einzelteildarstellung des Verstellgetriebes gemäß Fig. 1;
- Fig. 3: eine vergrößerte perspektivische Darstellung einer Hybridspindelmutter mit einem im axial mittleren Bereich angeordneten Funktionsteil und an deren Stirnseiten angeordneten Metallbuchsen bzw. Metallmuttern als Festigkeitsteil der Hybridspindelmutter;
- Fig. 4: eine perspektivische Darstellung der in Fig. 3 dargestellten Hybridspindelmutter vor der Montage eines als Metallmutter ausgebildeten Festigkeitsteils;
- Fig. 5: einen Teillängsschnitt durch die Hybridspindelmutter gemäß Fig. 3;
- Fig. 6 und 7: eine perspektivische Darstellung und eine Seitenansicht einer Hybridspindelmutter mit einem mittleren Funktionsteil und zwei axial an das Funktionsteil anschließenden Festigkeitsteilen, deren Stirnseiten axial von den Stirnseiten des Funktionsteils und den Lagerböcken des Getriebegehäuses des Verstellgetriebes beabstandet sind;
- Fig. 8: einen Teillängsschnitt durch einen Spindelantrieb mit einer Hybridspindelmutter mit einem mittleren Funktionsteil und zwei Festigkeitsteilen gemäß den Fig. 6 und 7;
- Fig. 9: eine Ansicht einer Spindelmutter bestehend aus einem eine Außenverzahnung und eine Innenverzahnung tragenden Funktionsteil und einem Festigkeitsteil zur Ableitung von Kräften;
- Fig. 10: eine Schnittansicht der Spindelmutter gemäß Fig. 9;
- Fig. 11A: eine Seitenansicht der Spindelmutter entsprechend der Ansicht in Fig. 9;
- Fig. 11 B eine: Schnittansicht der Spindelmutter entlang der Linie A-A gemäß Fig. 11A;
- Fig. 11C: eine Schnittansicht der Spindelmutter entlang der Linie B-B gemäß Fig. 11A;
- Fig. 12: eine Ansicht eines Spindelgetriebes mit einem Verstärkungsteil zum einseitigen Abstützen eines Verstellgetriebes;
- Fig. 13: eine perspektivische Ansicht des Verstärkungsteils;
- Fig.14A: eine schematische Ansicht darstellend die Abstützwirkung des Verstärkungsteils bei einem Frontcrash und
- Fig. 14B: eine schematische Ansicht darstellend die Deformation des Verstellgetriebes und eines das Verstellgetriebe haltenden Haltewinkels bei einem Heckcrash.

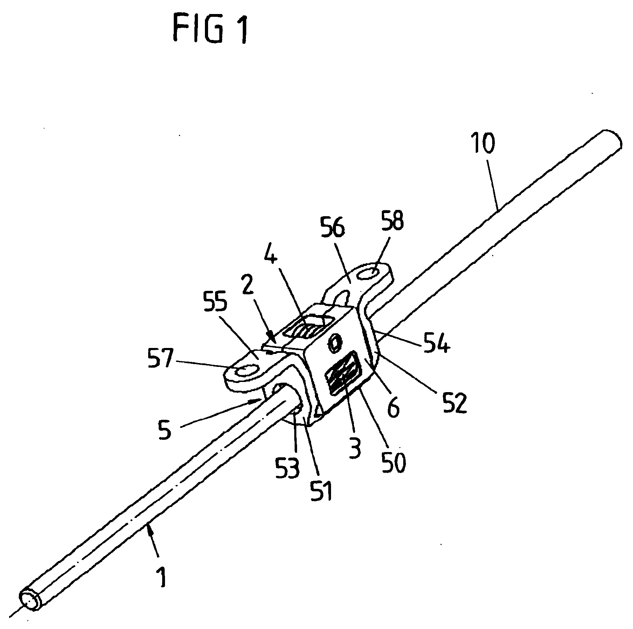

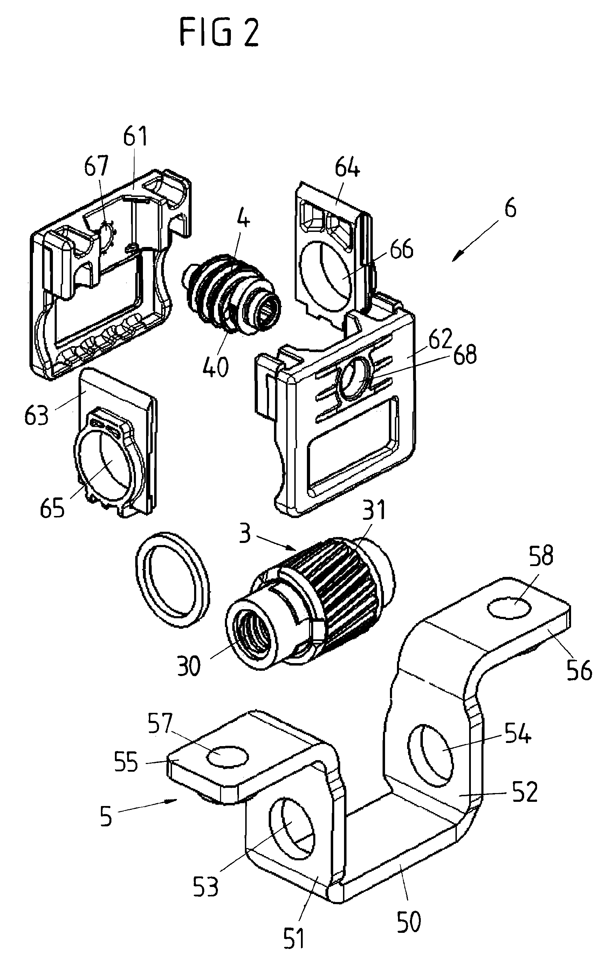

Fig. 2 zeigt in perspektivischer Darstellung die einzelnen Elemente des Verstellgetriebes 2 gemäß Fig. 1, wobei gleiche Bezugsziffern gleiche Teile wie in Fig. 1 bezeichnen, so dass bezüglich der Zusammensetzung und Funktion des Verstellgetriebes 2 auf die vorstehende Beschreibung zur Fig. 1 verwiesen wird.

Das Getriebegehäuse 6 des Verstellgetriebes 2 gemäß Fig. 1 setzt sich aus zwei Gehäuseschalen 61, 62 mit darin angeordneten Bohrungen 67, 68 zur Aufnahme der Antriebsschnecke 4 sowie zwei Lagerböcken 63, 64 mit darin angeordneten Lagerbohrungen 65, 66 zur Aufnahme der Hybridspindelmutter 3 zusammen, deren als Schrägverzahnung ausgebildete Außenverzahnung 31 mit der Schneckenverzahnung 40 der Antriebsschnecke 4 kämmt und deren in Fig. 2 nicht erkennbare Innenverzahnung im zusammengebauten Zustand des Spindelantriebs gemäß Fig. 1 mit dem Außengewinde 10 der Spindel 1 in Eingriff steht.

Weiterhin zeigt Fig. 2 den das Getriebegehäuse 6 des Verstellgetriebes 2 aufnehmenden Haltewinkel 5, dessen Aufbau und Funktion vorstehend anhand der Fig. 1 beschrieben wurde.

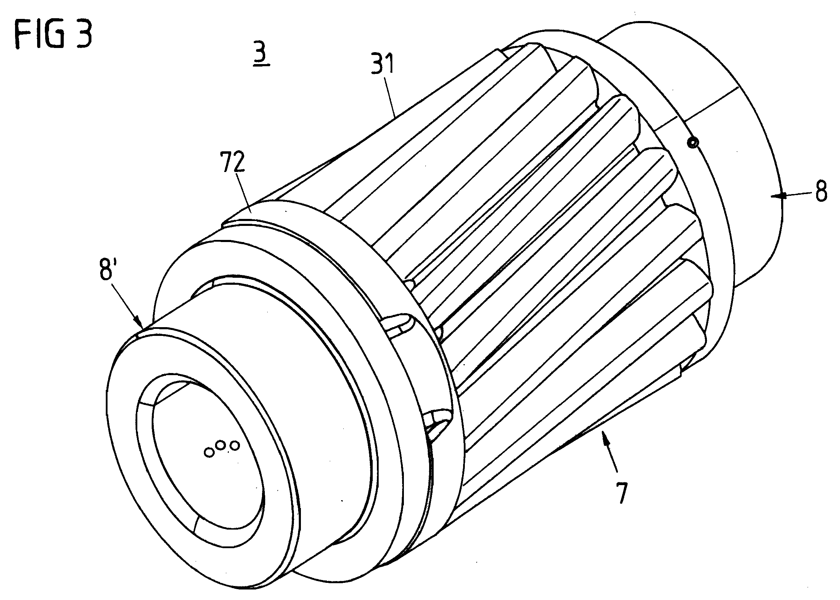

Die in Fig. 3 in vergrößerter perspektivischer Einzeldarstellung gezeigte Hybridspindelmutter 3 setzt sich aus einem mittleren Funktionsteil 7 und zwei an den Stirnseiten des mittleren Funktionsteils 7 angeordneten Festigkeitsteilen 8, 8' zusammen. Das Funktionsteil 7 enthält die mit dem Außengewinde 10 der Spindel 1 gemäß Fig. 1 kämmende Innenverzahnung sowie die als Schrägverzahnung ausgebildete Außenverzahnung 31, die mit der Schneckenverzahnung 40 der Antriebsschnecke 4 kämmt. Vorzugsweise ist eine Stirnseite des Funktionsteils 7 mit einem Flansch 72 abgeschlossen. Aus Gründen vereinfachter Herstellung, geringerer Kosten, minimaler Geräusche und minimalen Gewichts besteht das Funktionsteil 7 aus Kunststoff bzw. aus einem mit Kunststoff im Bereich der Verzahnungen umspritzten Material, wobei der Kunststoff den Stabilitätsanforderungen im Normalbetrieb, d. h. beim Verstellen der Verstellschiene der Sitzlängsverstellung des Kraftfahrzeugsitzes, genügt.

Die als Festigkeitsteil der Hybridspindelmutter 3 dienenden, an die Stirnseiten des Funktionsteils 7 anschließenden Buchsen 8, 8' bestehen vorzugsweise aus Stahl, können aber auch aus einem Kunststoff hoher Festigkeit, einem kunststoffbeschichteten Metall oder dergleichen bestehen. Als Festigkeitsteil der Hybridspindelmutter 3 kann eine an einer Stirnseite des Funktionsteils 7 angeordnete Buchse oder mit einem Innengewinde versehene Mutter vorgesehen werden oder es werden an beiden stirnseitigen Enden des Funktionsteils 7 Buchsen oder mit einem Innengewinde versehene Muttern als Festigkeitsteile 8, 8' eingesetzt.

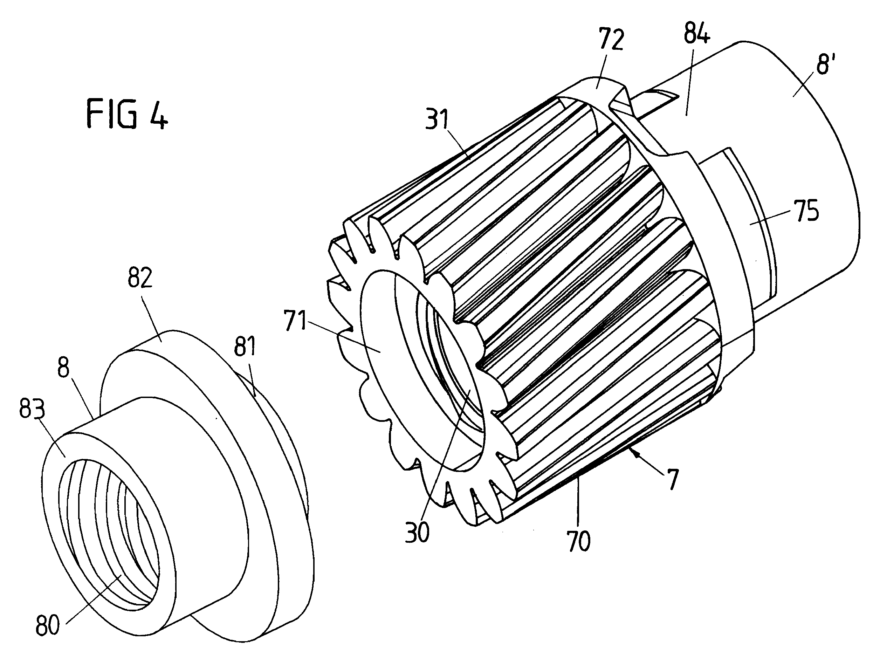

Wie den perspektivischen Darstellungen der Fig. 2 und 4 zu entnehmen ist, weist das Funktionsteil 7 der Hybridspindelmutter 3 einen hohlzylindrischen Grundkörper 70 auf, der die Außenverzahnung 31 der Hybridspindelmutter 3 trägt und die Innenverzahnung 30 enthält, die mit dem Außengewinde 10 der Spindel 1 kämmt. An den Stirnseiten des Funktionsteils 7 sind zylinderringförmige oder napfförmige Vertiefungen 71 vorgesehen, in die zylinderringförmige Vorsprünge 81 der die Festigkeitsteile der Hybridspindelmutter 3 bildenden Buchsen oder Muttern 8, 8' eingreifen und durch Kleben, Umspritzen oder Lasern mit dem Funktionsteil 7 verbunden werden.

Wie Fig. 4 andeutet, kann bei nur einseitig geforderter Crashfestigkeit ein einzelnes, als Buchse oder Mutter (Buchse mit Innengewinde) aus Stahl ausgebildetes Festigkeitsteil 8 der Hybridspindelmutter 3 vorgesehen werden, das mit der einen Stirnseite des die Verzahnungen 30, 31 tragenden Funktionsteils 7 der Hybridspindelmutter 3 verbunden wird, während die andere Stirnseite in verminderter Festigkeit ausgebildet ist und beispielsweise einteilig oder als angespritztes Teil mit dem Funktionsteil 7 verbunden ist. Alternativ können beide Stirnseiten des Funktionsteils 7 mit einem vorzugsweise gleichartig als Buchse oder Mutter ausgebildeten Festigkeitsteil 8, 8' verbunden werden, um eine hohe Crashfestigkeit sowohl bei einem Front- als auch bei einem Heckcrash auch bei extremen Temperaturen zu gewährleisten.

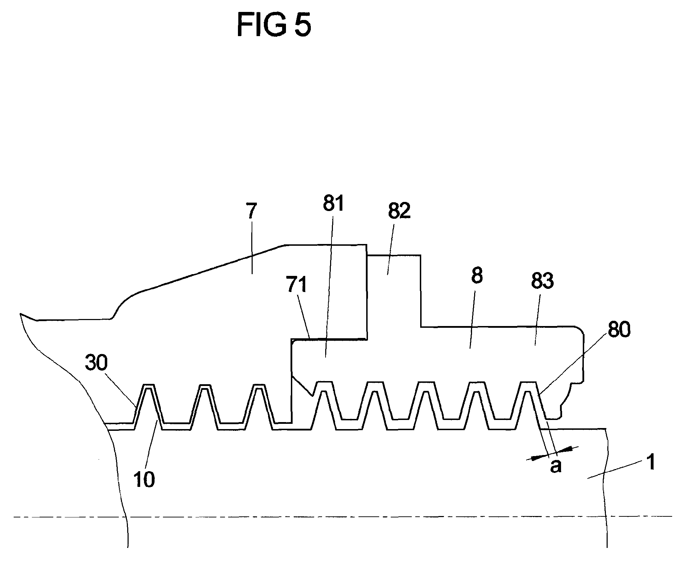

An den zylinderringförmigen Vorsprung 81 der Buchse oder Mutter 8 schließt sich ein an der Stirnseite des Funktionsteils 7 anliegender Flansch 82 an, an den sich ein zylinderringförmiger Absatz 83 anschließt, der in die Lagerbohrung 65 des Lagerbocks 63 des Getriebegehäuses 6 eingesetzt wird. Zusätzlich ist die Buchse bzw. Mutter 8 mit einer Innenverzahnung 80 versehen, deren Form und Funktion nachfolgend anhand des in Fig. 5 dargestellten Längsschnittes durch einen Teil der Hybridspindelmutter 3 erläutert wird.

Der in Fig. 5 dargestellte Teillängsschnitt durch eine Hybridspindelmutter 3 zeigt die Spindel 1 mit ihrem Außengewinde 10 sowie das Funktionsteil 7 der Hybridspindelmutter 3 mit ihrer Innenverzahnung 30, die sich in Eingriff mit dem Außengewinde 10 der Spindel 1 befindet. Die mit dem zylinderringförmigen Vorsprung 81 in die napfförmige oder zylinderringförmige Vertiefung 71 des Funktionsteils 7 eingreifende, das Festigkeitsteil der Hybridspindelmutter 3 bildende Buchse oder Mutter 8 liegt mit dem Flansch 82 an der Stirnseite des Funktionsteils 7 an und weist eine Innenverzahnung 80 auf, deren Zahnform und Zahngröße so ausgebildet ist, dass sie einen Abstand a zum Außengewinde 10 der Spindel 1 einhält.

Die in Fig. 5 dargestellte Konfiguration zeigt die Hybridspindelmutter 3 im Normalbetrieb des Spindelantriebs. Im Crashfall verformt sich die Innenverzahnung 30 des Funktionsteils 7 der Hybridspindelmutter 3 aufgrund der Materialeigenschaften des Funktionsteils 7, so dass die Flanken der Innenverzahnung 80 des Festigkeitsteils 8 der Hybridspindelmutter 3 in Eingriff mit dem Außengewinde 10 der Spindel 1 geraten und sich dadurch das Festigkeitsteil 8 und damit die Hybridspindelmutter 3 in das Außengewinde 10 der Spindel 1 verkrallt, wobei die Materialeigenschaften des Festigkeitsteils 8 gewährleisten, dass keine oder keine wesentliche Verformung der Innenverzahnung 80 des Festigkeitsteils 8 auftritt und damit sichergestellt ist, dass die Hybridspindelmutter 3 nicht in Längsrichtung der Spindel 1 "durchrutscht". Damit ist auch sichergestellt, dass das mit der Verstellschiene der Sitzlängsverstellung des Kraftfahrzeugsitzes verbundene Verstellgetriebe 2 gemäß Fig. 1 nicht ungewollt auf der Spindel 1 in Längsrichtung der Spindel 1 verstellt wird.

Neben einer ersten Ausgestaltung des Funktionsteils 7 und des Festigkeitsteils 8, 8' der Hybridspindelmutter 3 mit einem Funktionsteil 7 aus Kunststoff und zwei axialen Festigkeitsteilen 8, 8' aus Stahl sind auch andere Materialzusammensetzungen des Funktionsteils 7 und des Festigkeitsteils 8, 8' möglich, die der Aufgabenstellung dienen, die Hybridspindelmutter 3 einfach, leicht und kostengünstig bei geräuscharmer Betriebsweise und hoher Stabilität und Crashfestigkeit auch bei extremen Temperaturen zu gestalten. So können das Funktionsteil 7 und das Festigkeitsteil 8, 8' beispielsweise aus
- Kunststoffen unterschiedlich hoher Festigkeit hergestellt werden,
- aus einem Grundkörper aus Metall, vorzugsweise Stahl, bestehen, der im Verzahnungsbereich des Funktionsteils mit Kunststoff umspritzt wird,
- aus einem als hohlzylindrischer Körper aus einem metallischen Werkstoff, ausgebildeten Grundkörper mit schmalen Zahnflanken als Innengewinde bestehen, der innen und zumindest im Bereich des Außengewindes des Funktionsteils mit Kunststoff umspritzt ist, oder
- aus einem Grundkörper aus zwei hohlzylindrischen Halbschalen aus Metall, insbesondere aus Stahl, bestehen, die im Bereich der Stirnseiten von zwei als Festigkeitsteil dienenden Hülsen umschlossen sind, während ein die Innen- und Außenverzahnung der Hybridspindelmutter bildender Kunststoff auf die Innenund Außenfläche der hohlzylindrischen Halbschalen aufgespritzt ist.

Weiterhin können die Festigkeitsteile aus Metallmuttern bestehen, von denen die eine Metallmutter das eigentliche Festigkeitsteil bildet, während die andere Metallmutter als zusätzliches Festigkeitsteil zur Aufnahme von beispielsweise bei einem Heckcrash wirkenden Crashkräften vorgesehen ist. Beide Metallmuttern weisen eine Innenverzahnung auf, deren Zahnflanken im Normalbetrieb im Abstand a gemäß Fig. 5 vom Außengewinde der Spindel beabstandet verlaufen.

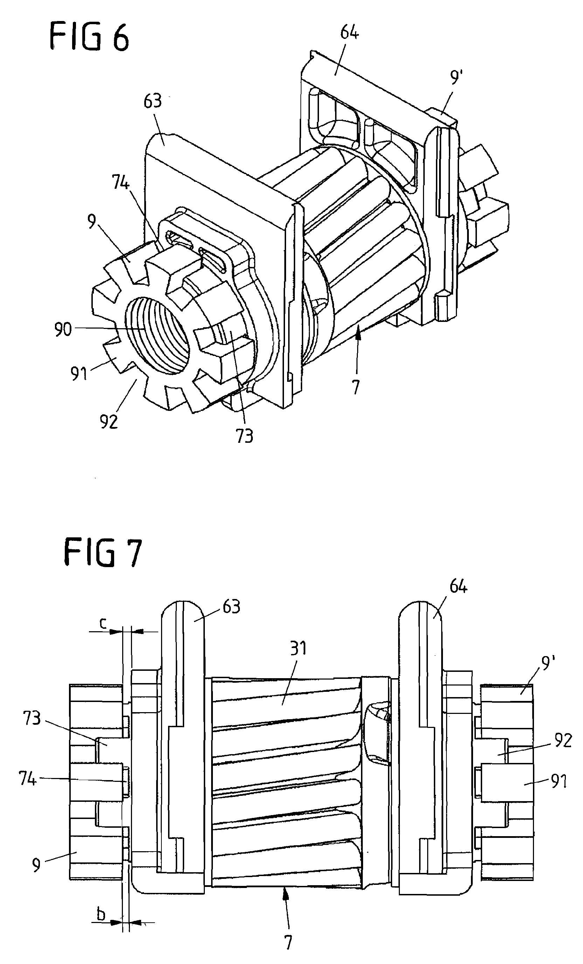

In den Fig. 6 bis 8 ist in einer perspektivischen Ansicht, einer Seitenansicht und in einem Längsschnitt durch das Verstellgetriebe 2 gemäß Fig. 1 ein nicht anspruchsgemäßes Ausführungsbeispiel dargestellt, bei dem anstelle eines Gewindespiels zwischen der Innenverzahnung des mindestens einen Festigkeitsteils und dem Außengewinde der Spindel ein axialer Abstand zwischen den Stirnseiten des Funktionsteils und den diesen Stirnseiten des Funktionsteils zugewandten Stirnseiten der Festigkeitsteile sowie ein axialer Abstand zwischen den Stirnseiten des Festigkeitsteils und den Lagerböcken des Getriebegehäuses des Verstellgetriebes bzw. dem Haltewinkel vorgesehen ist, während die Innenverzahnung der Festigkeitsteile mit dem Außengewinde der Spindel kämmt.

Fig. 6 zeigt in perspektivischer Ansicht und Fig. 7 in einer Seitenansicht die aus einem Funktionsteil 7 und zwei Festigkeitsteilen 9, 9' bestehende Hybridspindelmutter. Die Achse des Funktionsteils 7 ist in den Lagerböcken 63, 64 des Getriebegehäuses 6 gemäß Fig. 2 gelagert und weist stirnseitige Enden auf, an denen Vorsprünge 73 und dazwischen liegende Nuten 74 ausgebildet sind, die mit korrespondierenden Vorsprüngen 91 und Nuten 92 von als Gewindemuttern ausgebildeten Festigkeitsteilen 9, 9' verzahnt sind. Die Festigkeitsteile 9, 9' weisen eine Innenverzahnung 90 auf, die in montiertem Zustand mit dem Außengewinde 10 der Spindel 1 gemäß Fig. 1 kämmt.

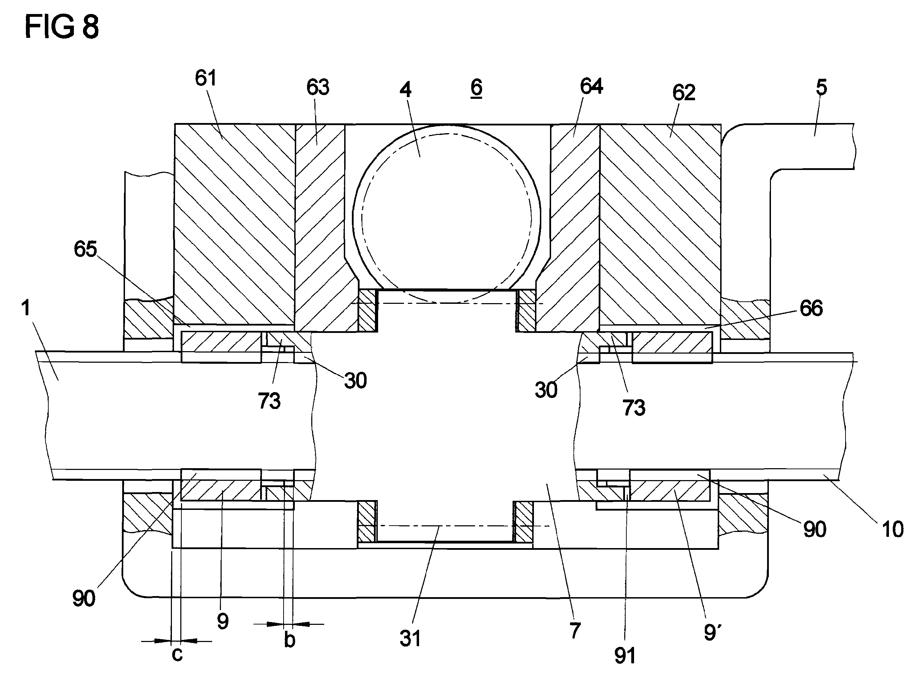

Die stirnseitigen Enden des Funktionsteils 7 weisen einen Abstand b zu den stirnseitigen Enden der Vorsprünge 91 der Festigkeitsteile 9, 9' auf, die in montiertem Zustand im Normalbetrieb des Spindelantriebs einen Abstand c zur Stirnseite der Lagerböcke 63, 64 (Fig. 7) bzw. zum Haltewinkel 5 (Fig. 8) aufweisen.

Die Vorsprünge 73, 91 an den Stirnseiten des Funktionsteils 7 bzw. der Festigkeitsteile 9, 9' sind gleichmäßig am Umfang verteilt angeordnet und nach Art einer Schwalbenschwanzführung ausgebildet, d. h., sie weisen eine keilförmige Struktur auf, die in Umfangsrichtung eine formschlüssige Verbindung zwischen den Vorsprüngen 73, 91 bzw. Nuten 92, 74 ermöglicht, die in axialer Richtung infolge des gegenseitigen stirnseitigen Abstands beweglich zueinander sind, so dass im Normalbetrieb keine axialen Kräfte vom Funktionsteil 7 auf die Festigkeitsteile 9, 9' übertragen werden. Die Vorsprünge 73, 91 und Nuten 92, 74 dienen als Mitnehmer im Normalbetrieb des Spindelgetriebes, indem eine von der Antriebsschnecke 4 gemäß Fig. 2 in die Spindelverzahnung eingeleitete Drehbewegung des Funktionsteils 7 zu einer Mitnahme der Festigkeitsteile 9, 9' führt, ohne dass eine Verstellkraft auf die Festigkeitsteile 9, 9' übertragen wird. Die Festigkeitsteile 9, 9' laufen somit ohne Kraftübertragung und damit ohne nennenswerte Reibungskraft im Normalbetrieb mit, d. h., deren Innenverzahnung 90 läuft auf dem Außengewinde 10 der Spindel 1 gemäß Fig. 1 ab, ohne dass hierbei eine Verstellkraft übertragen wird.

Fig. 8 zeigt in einem Längsschnitt durch das Verstellgetriebe 2 gemäß Fig. 1 das zweite Ausführungsbeispiel im zusammengebauten Zustand.

Das aus Kunststoff hergestellte Funktionsteil 7 der Hybridspindelmutter 3 trägt die mit dem Außengewinde 10 der Spindel 1 kämmende Innenverzahnung 30 sowie die mit der Schneckenverzahnung der Antriebsschnecke kämmende Außenverzahnung 31 und ist in den Lagerbohrungen 65, 66 der von den Gehäuseschalen 61, 62 des Getriebegehäuses 6 aufgenommenen Lagerböcke 63, 64 des Getriebegehäuses 6 des Verstellgetriebes 2 gelagert. Das Getriebegehäuse 6 ist in dem Haltewinkel 5 aus einem hochfesten Werkstoff, vorzugsweise aus Metall, angeordnet, der mit der Verstellschiene des Sitzlängsverstellung des Kraftfahrzeugsitzes verbunden ist.

An beiden Stirnseiten des Funktionsteils 7 sind die Festigkeitsteile 9, 9' angeordnet, deren Innenverzahnung 90 mit dem Außengewinde 10 der Spindel 1 kämmt, d. h. im Unterschied zu dem anhand der Fig. 5 beschriebenen ersten Ausführungsbeispiel weist die Innenverzahnung 90 keinen Abstand vom Außengewinde 10 der Spindel 1 und damit kein Gewindespiel auf.

An den einander gegenüber stehenden Stirnseiten des Funktionsteils 7 und der Festigkeitsteile 9, 9' sind die in den Fig. 6 und 7 dargestellten Vorsprünge 73 des Funktionsteils 7 zu erkennen, die in Nuten der Festigkeitsteile 9 eingreifen sowie die Vorsprünge 91 der Festigkeitsteile 9, 9', die in die Nuten an den Stirnseiten des Funktionsteils 7 eingreifen. Die Vorsprünge und Nuten des Funktionsteils 7 und der Festigkeitsteile 9, 9' dienen als Mitnehmer, durch den die bei einer durch die Antriebseinrichtung des Spindelantriebs über die Antriebsschnecke eingeleiteten Drehbewegung des Funktionsteils 7 die Festigkeitsteile 9, 9' in der jeweiligen Drehrichtung mitgenommen werden, so dass diese bei einer Verstellbewegung des Verstellgetriebes 2 gemäß Fig. 1 entlang der Spindel 1 mit dem Funktionsteil 7 mitbewegt werden.

Die Enden der Vorsprünge 91 der Festigkeitsteile 9, 9' weisen in montiertem Zustand einen Abstand b von der Stirnseite des Funktionsteils 7 und auf der entgegen gesetzten Stirnseite der Festigkeitsteile 9, 9' einen Abstand c zum Haltewinkel 5 auf. Durch dieses axiale Spiel der Festigkeitsteile 9, 9' sowohl gegenüber dem Funktionsteil 7 als auch gegenüber dem Haltewinkel 5 ist sichergestellt, dass im Normalbetrieb keine Verstellkräfte auf die Festigkeitsteile 9, 9' übertragen werden, so dass in axialer Richtung keine Belastung auf die Festigkeitsteile 9, 9' ausgeübt wird und infolge fehlenden Reibwiderstandes keine Reduzierung des Wirkungsgrades oder der Kraftübertragung auftritt. Lediglich bei einer Ausgestaltung der Festigkeitsteile 9, 9' als Metallteile kann eine geringe Geräuschentwicklung infolge der mit dem Außengewinde 10 der Spindel 1 kämmenden Innenverzahnung 90 der Festigkeitsteile 9, 9' entstehen, die aber wegen der fehlenden axialen Belastung sehr gering ist. Bei anderer Materialauswahl für die Festigkeitsteile 9, 9' kann eine derartige Geräuschentwicklung vollständig vermieden werden.

Im Crashfall verformt sich die mit einem Kunststoff beschichtete oder aus Kunststoff bestehende Innenverzahnung 30 des Funktionsteils 7 der Hybridspindelmutter 3, so dass je nach Richtung der auftretenden Crashkraft die Abstände b und c der Stirnseiten des betreffenden Festigkeitsteils 9 bzw. 9' von der Stirnseite des Funktionsteils 7 bzw. dem Haltewinkel 5 überbrückt werden und die auf das Funktionsteil 7 einwirkende Crashkraft auf das betreffende Festigkeitsteil 9 bzw. 9' übertragen wird, dessen mit dem Außengewinde 10 der Spindel 1 in Eingriff stehende Innenverzahnung 90 sich mit dem Außengewinde 10 der Spindel 1 verkrallt, wobei die Materialeigenschaften der Festigkeitsteile 9, 9' gewährleisten, dass keine oder keine wesentliche Verformung der Innenverzahnung 90 des jeweiligen Festigkeitsteils 9 bzw. 9' auftritt und damit sichergestellt ist, dass die Hybridspindelmutter 3 nicht in Längsrichtung der Spindel 1 "durchrutscht". Damit ist gewährleistet, dass das mit der Verstellschiene der Sitzlängsverstellung des Kraftfahrzeugsitzes verbundene Verstellgetriebe 2 gemäß Fig. 1 nicht ungewollt auf der Spindel 1 in Längsrichtung der Spindel 1 verstellt wird.

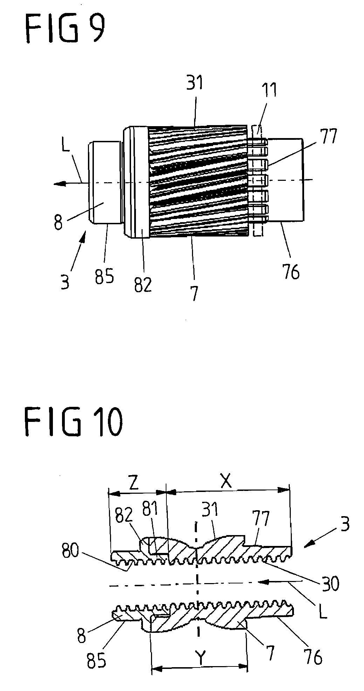

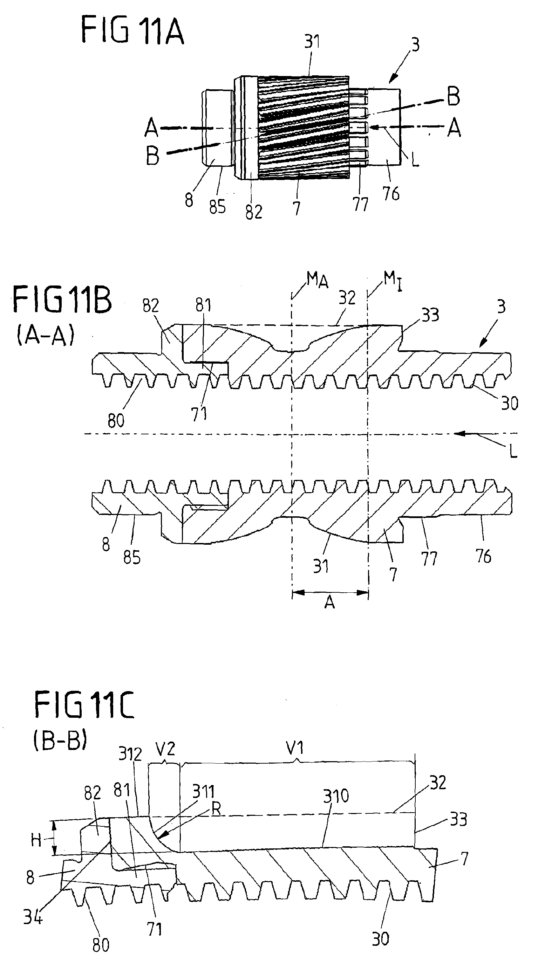

Fig. 9 und 10 zeigen eine Ausführungsform einer Spindelmutter 3, die sich aus einem die Außenverzahnung 31 und die Innenverzahnung 30 tragenden Funktionsteil 7 und einem einseitig an das Funktionsteil 7 angesetzten Festigkeitsteil 8 zusammensetzt. Das Festigkeitsteil 8 greift dabei über einen zylinderringförmigen Vorsprung 81 in eine napfförmige Vertiefung 71 (siehe Fig. 11 B) des Funktionsteils 7 ein und ist mit dem Funktionsteil 7 beispielsweise verklebt oder verschweißt.

Bauteile gleicher Funktion sollen auch bei dieser Ausführungsform, soweit zweckdienlich, mit gleichen Bezugszeichen versehen sein.

Das Festigkeitsteil 8 weist eine Innenverzahnung 80 auf, deren Zähne, wie aus Fig. 11 B deutlich ersichtlich, schmaler als die Zähne der Innenverzahnung 30 des Funktionsteils 7 ausgebildet sind und in betriebsgemäßem Zustand der Spindelmutter 3 von dem Außengewinde 10 der Spindel 1 beabstandet sind. Mit anderen Worten weisen die Zahnflanken der Zähne der Innenverzahnung 80 des Festigkeitsteils 8 im betriebsgemäßen Zustand einen Abstand zu den Zahnflanken des Außengewindes 10 der Spindel 1 auf, so dass die Innenverzahnung 80 des Festigkeitsteils 8 nicht in Eingriff mit dem Außengewinde 10 der Spindel 1 ist. Das Festigkeitsteil 8 wird somit im Betrieb des Spindelgetriebes zusammen mit dem Funktionsteil 7 verdreht, ohne dabei jedoch in Anlage mit dem Außengewinde 10 der Spindel 1 zu sein und damit ohne zur Reibung der Spindelmutter 3 beizutragen.

Das Festigkeitsteil 8 liegt über einen Flansch 82 an einer Stirnfläche 34 des Funktionsteils 7 an und weist einen zylindrischen Lagerbund 85 auf, über den und einen am Funktionsteil 7 ausgebildeten Lagerbund 76 die Spindelmutter 3 an den Lagerbohrungen 65, 66 der Lagerböcke 63, 64 gelagert ist.

Das Festigkeitsteil 8 ist, wie vorangehend geschildert, aus einem anderen, insbesondere festerem Werkstoff als das Funktionsteil 7 ausgebildet. Beispielsweise kann das Festigkeitsteil 8 aus einem Hartmetall ausgebildet sein, während das Funktionsteil 7 ganz oder zumindest teilweise aus einem Kunststoff hergestellt ist. Das Festigkeitsteil 8 dient dazu, die Festigkeit der Spindelmutter 3 zu erhöhen und bei großen Belastungskräften insbesondere in einem Crashfall ein Durchrutschen der Spindelmutter 3 zu verhindern, indem die Innenverzahnung 80 des Festigkeitsteils 8 mit dem Außengewinde 10 der Spindel 1 verkrallend in Anlage gerät.

An dem Lagerbund 76 des Funktionsteils 7 sind zusätzlich noch sich axial entlang der Längsrichtung L der Spindel 1 erstreckende Abstandsrippen 77 ausgebildet, die zur Lagerung einer Anlaufscheibe 11 dienen, die lose und nicht drehfest an dem Funktionsteil 7 angeordnet ist, um das Funktionsteil 7 mit einer endseitigen Stirnfläche 33 (Fig. 11 B) gleitend an dem zugeordneten Lagerbock 63, 64 in Längsrichtung L abzustützen.

Wie aus Fig. 10 ersichtlich, ist die Länge X der mit dem Außengewinde 10 der Spindel 1 in Eingriff stehenden Innenverzahnung 30 des Funktionsteils 7 größer als die Länge Z der Innenverzahnung 80 des Festigkeitsteils 8 und insbesondere auch größer als die Länge Y der Außenverzahnung 31 des Funktionsteils 7. In Längsrichtung L erstreckt sich damit die Innenverzahnung 30 über eine größere Länge X als die Außenverzahnung 31, was die Festigkeit der Spindelmutter 3 gegenüber einem Durchrutschen in Längsrichtung L weiter erhöht.

Grundlegend können auch hier zwei Festigkeitsteile 8 beidseits des Funktionsteils 7 verwendet werden. In diesem Fall wäre die Länge X der Innenverzahnung 30 kürzer als die Länge Y der Außenverzahnung 31.

Wie aus Fig. 10 und Fig. 11 B ersichtlich, sind eine Mittenebene MA der Außenverzahnung 31 und eine Mittenebene MI der Innenverzahnung 30 in Längsrichtung L mit einem Abstand A zueinander beabstandet. Mit anderen Worten liegen die Schwerpunkte der Außenverzahnung 31 und der Innenverzahnung 30 in Längsrichtung L auseinander, wodurch sich eine asymmetrische Spindelmutter 3 mit asymmetrischer Krafteinleitung in die Spindel 1 ergibt. Während die Kraft von der Antriebsschnecke 4 über die Außenverzahnung 31 im Schwerpunkt in der Mittenebene MA erfolgt, wird die Kraft über die Innenverzahnung 30 im Schwerpunkt in der Mittenebene MI auf die Spindel 1 übertragen.

Wie aus Fig. 10 und Fig. 11 B ersichtlich, erstreckt sich die Innenverzahnung 30 dabei bis in den Bereich des Lagerbunds 76 hinein und damit axial über die Außenverzahnung 31 hinaus.

Die asymmetrische Ausbildung der Spindelmutter 3 mit axial zur Außenverzahnung 31 versetzter Innenverzahnung 30 ermöglicht die Verwendung einerseits des Festigkeitsteils 8 mit daran angeordneter, in betriebgemäßem Zustand beabstandeter Innenverzahnung 80 und andererseits einer langen Innenverzahnung 30 zur Übertragung von Verstellkräften.

Die Außenverzahnung 31 am Funktionsteil 7 ist als Schrägverzahnung ausgebildet mit Zähnen, die schräg zur Längsrichtung L gerichtet sind. So sind die Zähne, wie Fig. 11A veranschaulicht, mit ihrem Zahngrund entlang der Linie B-B gerichtet. Die Außenverzahnung 31 ist dabei so ausgebildet, dass sie sich von der in Fig. 11A bis 11C rechten Stirnfläche 33 hin zur anderen Stirnfläche 34 erstreckt, wobei die Außenverzahnung 31 unmittelbar an der Stirnfläche 33 beginnt, zur anderen Stirnfläche 34 hin aber ausläuft.

Was hierunter zu verstehen ist, ist in Fig. 11C, darstellend eine Schnittansicht eines Ausschnitts der Spindelmutter 3 entlang der Linie B-B, anhand des Verlaufs des Zahngrunds eines Zahns der Außenverzahnung 31 veranschaulicht. Die Außenverzahnung ist in Längsrichtung L in zwei Verzahnungsabschnitte V1, V2 geteilt, von denen der eine Verzahnungsabschnitt V1 mit einer zylindrischen Verzahnung und der zweite Verzahnungsabschnitt V2 mit einer Verzahnung mit kontinuierlich abnehmender Zahntiefe H ausgebildet ist. Im Verzahnungsabschnitt V1 kann die Verzahnung beispielsweise mit einem Evolventenprofil ausgebildet sein, während im Verzahnungsabschnitt V2 eine Globoidverzahnung mit hin zur Stirnfläche 34 abnehmender Zahntiefe H vorgesehen ist. Die Außenverzahnung 31 ist dabei durch radial nach innen weisende Vertiefungen in einer zylindrischen Mantelfläche 32 eines mittleren Abschnitts des Funktionsteils 7 ausgebildet, wobei die Zahntiefe H im Verzahnungsabschnitt V1 konstant ist und im Verzahnungsabschnitt V2 in Richtung der Stirnfläche 34 abnimmt.

Ist die Außenverzahnung 31 im Bereich des Verzahnungsabschnitts V2 als Globoidverzahnung ausgebildet, ist der Zahngrund 311 eines jeden Zahns in diesem Verzahnungsabschnitt V2 gewölbt mit einem Radius R, der größer als die Zahntiefe H ist. Die Zahntiefe H reduziert sich in diesem Verzahnungsabschnitt V2 bis auf Null, so dass sich an den Verzahnungsabschnitt V2 ein verzahnungsfreier Endabschnitt 312 anschließt, der die Außenverzahnung 31 seitlich begrenzt.

Die Außenverzahnung 31 kann im Bereich des Verzahnungsabschnitts V2 auch als auslaufende Verzahnung mit einem Radius R ausgebildet sein, der kleiner oder gleich der maximalen Zahntiefe H ist. In diesem Fall ist der Zahngrund 311 in diesem Verzahnungsabschnitt V2 gewölbt, insbesondere um Kerbspannungen beim Übergang vom (zylindrischen) Verzahnungsabschnitt V1 in den verzahnungsfreien Endabschnitt 312 zu reduzieren.

Dadurch, dass der Verzahnungsabschnitt V1 sich bis hin zur Stirnfläche 33 erstreckt, ist die Außenverzahnung 31 an der Stirnfläche 33 offen. Dies ermöglicht eine einfache Herstellung des Funktionsteils 7 der Spindelmutter 3 durch Spritzgießen. Denn zum Entformen kann das Funktionsteil 7 in einfacher Weise entlang der Längsrichtung L aus einem Spritzgießwerkzeug entfernt werden. Dies ermöglicht ein Herstellen des Funktionsteils 7 mit daran angeordneter Außenverzahnung 31 in einem einzigen Arbeitsgang ohne Verwendung von Schiebern zur Einformung der Außenverzahnung 31.

Durch abschnittsweise Ausbildung der Außenverzahnung 31 als Globoidverzahnung kann zudem die Festigkeit der Außenverzahnung 31 zur vorteilhaften Kraftübertragung von der Antriebsschnecke 4 auf die Spindelmutter 3 eingerichtet sein. Durch die Globoidverzahnung ist die Außenverzahnung 31 zumindest abschnittsweise der Verzahnung 40 (in Form eines Schneckengewindes) der Antriebsschnecke 4 angepasst, so dass sich eine vorteilhafte flächige Anlage der Verzahnung 40 der Antriebsschnecke 4 an die Zahnflanken der Außenverzahnung 31 der Spindelmutter 3 ergibt.

In die Längsrichtung L, entlang der sich die Spindel 1 erstreckt, wird der Fahrzeugsitz über das Verstellgetriebe 2 an der Spindel 1 gehalten. Das Verstellgetriebe 2 muss deswegen so ausgelegt sein, dass es die Belastungskräfte, insbesondere die bei einem Crash von der Verstellschiene 91 eingeleiteten Kräfte, in geeigneter Weise aufnehmen kann derart, dass ein Durchrutschen des Fahrzeugsitzes bei einem Crash verhindert ist, um ein plötzliches Verstellen des Fahrzeugsitzes und daraus resultierende Verletzungen eines Fahrzeuginsassen auszuschließen.

Die Anbindung des Verstellgetriebes 2 an die obere Verstellschiene 91 muss aus diesem Grund eine hinreichende Festigkeit aufweisen. Zudem sollte die Anbindung insbesondere bei einem Frontcrash auch eine hinreichend große Steifigkeit aufweisen, um eine Vorverlagerung eines einen Sitzgurt haltenden Gurtanbindungspunktes zu vermeiden, und die bei einem Frontcrash wirkenden Kräfte steif aufzunehmen. Eine zu steife Anbindung kann aber beim Heckcrash zur Folge haben, dass die wirkenden Crash-Kräfte direkt auf den Fahrzeuginsassen übertragen werden und zu einer abrupten Rückverlagerung des Fahrzeuginsassen, insbesondere dessen Kopfes führen. Um hierbei Verletzungen, beispielsweise ein Schleudertrauma, des Fahrzeuginsassen zu vermeiden, ist wünschenswert, eine solche Rückverlagerung zumindest abzudämpfen.

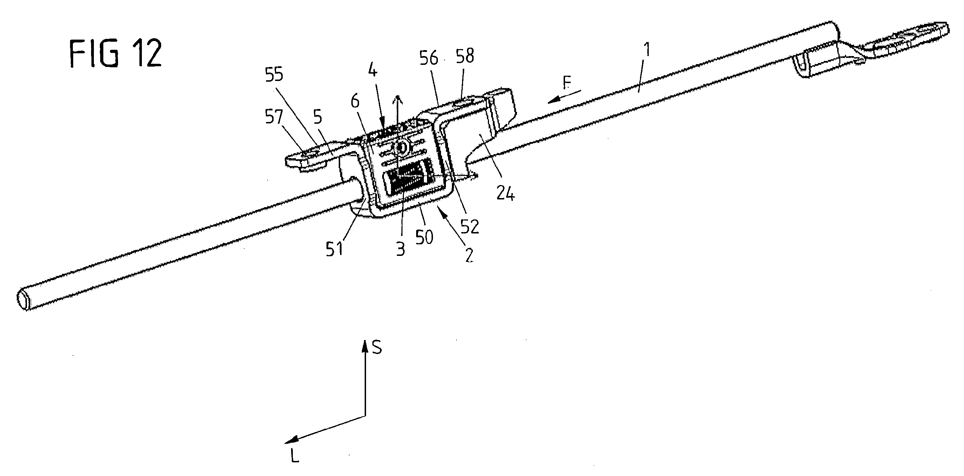

Fig. 12 zeigt eine Ausgestaltung eines Spindelgetriebes, bei dem zur einseitigen Abstützung des Verstellgetriebes 2 gegenüber der Verstellschiene ein Verstärkungsteil 24 vorgesehen ist, das ausgebildet und vorgesehen ist, in die Längsrichtung L der Spindel 1 auf das Verstellgetriebe 2 wirkende Kräfte F aufzunehmen und das Verstellgetriebe 2 bei Kraftwirkung in dieser Längsrichtung L abzustützen. Der Gedanke bei einem solchen Verstärkungsteil 24 ist, eine einseitige Abstützung des Verstellgetriebes 2 gegenüber der Verstellschiene bereitzustellen, durch die erreicht wird, dass bei Wirkung von Kräften in die Längsrichtung L sich das Verstellgetriebe 2 und dessen Anbindung an die Verstellschiene nicht deformieren können, die Anbindung also eine hohe Steifigkeit aufweist. Die Längsrichtung L entspricht hierbei der Fahrzeuglängsrichtung und ist in Richtung der Vorausfahrt eines Fahrzeugs gerichtet, so dass über das Verstärkungsteil 24 die bei einem Frontcrash infolge der Trägheit des Fahrzeugsitzes und eines Sitzinsassen entstehenden Kräfte F abgestützt werden und das Verstellgetriebe 2 bei einem Frontcrash in steifer Weise gehalten wird.

Bei entgegen gesetzter Kraftwirkung entgegen der Längsrichtung L hingegen wird das Verstellgetriebe 2 nicht abgestützt, so dass das Verstellgetriebe 2 sich zumindest um einen kleinen Weg deformieren kann und, im Sinne einer Knautschzone, die bei einem Crash wirkenden Kräfte nicht direkt und steif übertragen werden. Bei einem Heckcrash, bei dem Kräfte entgegen der Längsrichtung L auf das Verstellgetriebe 2 wirken, kann sich das Verstellgetriebe 2 und dessen Anbindung an die Verstellschiene 91 damit deformieren, ohne dass dies durch das Verstärkungsteil 24 verhindert wird, so dass zumindest ein Teil der Energie im Crashfall im Verstellgetriebe 2 und in dessen Anbindung absorbiert wird.

Eine Verwendung eines Verstärkungsteils 24 ist insbesondere sinnvoll in Kombination mit einer Spindelmutter 3 in Form einer Hybridspindelmutter der vorangehend geschilderten Art. Die Spindelmutter 3 stellt dabei eine hinreichend feste Verbindung auch in einem Crashfall zur Verfügung, so dass insbesondere bei einem Frontcrash, bei dem sich infolge der Wirkung des Verstärkungsteils 24 der Haltewinkel 5 nicht verformt und damit dessen Schenkel 51, 52 nicht verkrallend mit der Spindel 1 in Eingriff gelangen können, die wirkenden Crashkräfte über die Spindelmutter 3 abgeleitet werden können, ohne dass es zu einem Durchrutschen der Spindelmutter 3 kommt. Die Spindelmutter 3 stützt sich dazu über das Festigkeitsteil 8 an der Spindel 1 ab, so dass ein Durchrutschen verhindert ist.

Vorteilhafterweise ist, bei Verwendung einer Spindelmutter 3 mit nur einem (einseitigen) Festigkeitsteil 8, das Festigkeitsteil 8 an der dem Verstärkungsteil 24 zugewandten Seite der Spindelmutter 3 angeordnet.

Das beispielsweise als Kaltfließpressteil ausgebildete Verstärkungsteil 24 ist in Längsrichtung L hinter dem Verstellgetriebe 2 an den Haltewinkel 5 angesetzt. Das Verstärkungsteil 24 kann auf den Haltewinkel 5 aufgepresst oder auch über eine die Befestigungsstelle 58 durchgreifende Schraubverbindung mit dem Haltewinkel 5 und der Verstellschiene 91 verschraubt sein.

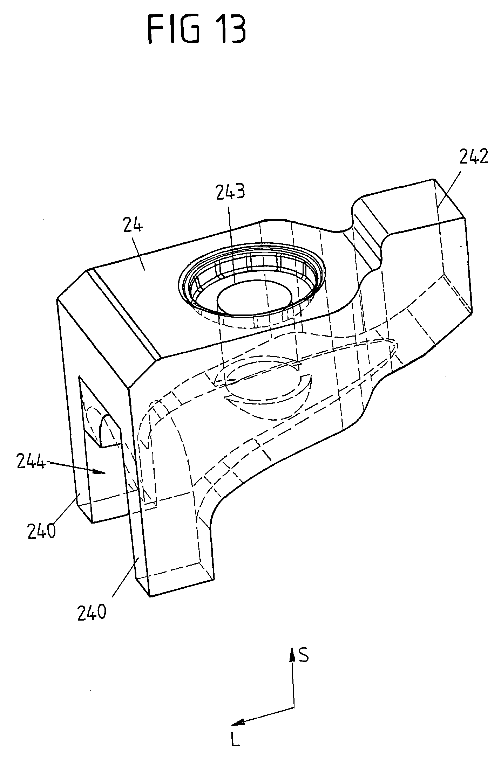

Eine vergrößerte, perspektivische Ansicht des Verstärkungsteils 24 zeigt Fig. 13. Das Verstärkungsteil 24 weist im Querschnitt zur Längsrichtung L eine U-Form auf mit zwei seitlichen Schenkeln 240, die sich in durch die Längsrichtung L und eine Vertikalrichtung S aufgespannten, parallelen Ebenen erstrecken und zwischen sich eine Aussparung 244 belassen, durch die hindurch sich die Spindel 1 in betriebsgemäßer Position erstreckt (siehe Fig. 12). Die Schenkel 240 verjüngen sich entgegen der Längsrichtung L und laufen in einen endseitigen Block 242 ein, der in montiertem Zustand des Verstellgetriebes 2 an der Verstellschiene 91 anliegt. Mittig an dem Verstärkungsteil 24 ist eine Durchgriffsöffnung 243 angeordnet, die in bestimmungsgemäßer Position des Verstärkungsteils 24 fluchtend mit der Befestigungsstelle 58 (Fig. 12) ist und über die das Verstärkungsteil 24 beispielsweise über eine Schraubverbindung mit dem Haltewinkel 5 und der Verstellschiene 91 verbunden werden kann.

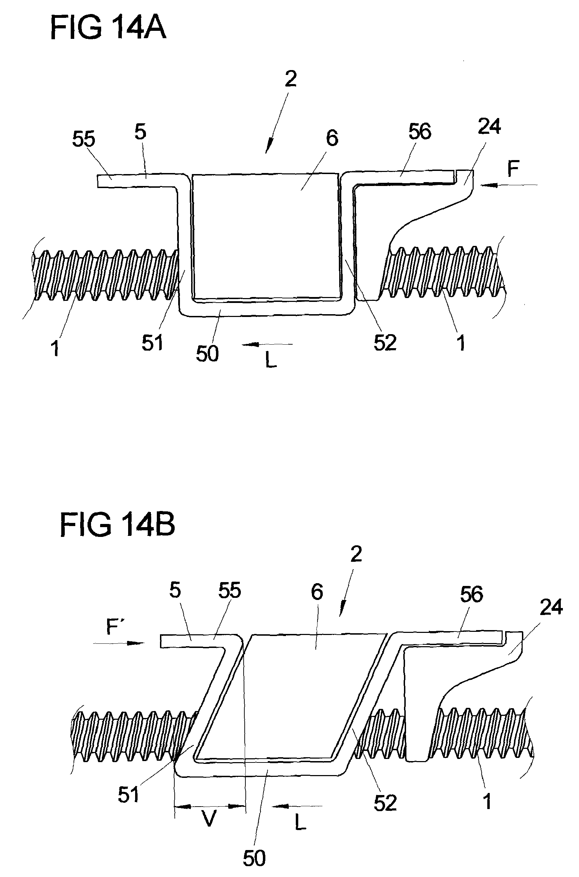

Die Schenkel 240 des Verstärkungsteils 24 bilden seitliche Abstützrippen zur Abstützung von in die Längsrichtung L wirkenden Kräften F aus. Dadurch, dass sich die die Abstützrippen ausbildenden Schenkel 240 parallel zur Längsrichtung L und zur Vertikalrichtung S erstrecken, werden die in die Längsrichtung L wirkenden Kräfte F in der Ebene der Schenkel 240 eingeleitet. Indem der Haltewinkel 5 mit seinem seitlichen Schenkel 52 an dem Verstärkungsteil 24 anliegt, wird der Haltewinkel 5 und darüber das Verstellgetriebe 2 bei in die Längsrichtung L von der Verstellschiene 91 in das Verstellgetriebe 2 eingeleiteten Kräften F abgestützt und kann sich nicht deformieren, so dass eine steife Anbindung des Verstellgetriebes 2 an die Verstellschiene 91 bereitgestellt wird. Dies veranschaulicht Fig. 14A: Bei Wirkung von Kräften F in die Längsrichtung L kann sich der Haltewinkel 5 aufgrund der abstützenden Wirkung des Verstärkungsteils 24 nicht verformen. Dies entspricht der Situation bei einem Frontcrash, bei dem somit eine steife Anbindung des Verstellgetriebes 2 an die Verstellschiene 91 und damit eine steife Verbindung der karosseriefesten Schiene 92 mit der Verstellschiene 91 bereitgestellt wird.

Bei entgegen gesetzter Kraftwirkung bei einem Heckcrash, bei dem Kräfte entgegen der Längsrichtung L auf das Verstellgetriebe 2 wirken, bleibt das Verstärkungsteil 24 hingegen unbelastet und wirkt nicht abstützend auf den Haltewinkel 5 ein. Dies ist in Fig. 14B veranschaulicht: Wirken Kräfte F' entgegen der Längsrichtung L auf das Verstellgetriebe 2 infolge der Trägheit des Fahrzeugsitzes und eines Fahrzeuginsassen bei einem Heckcrash, so kann sich der Haltewinkel 5 in dargestellter Weise durch Schrägstellen der Schenkel 51, 52 verformen.

Da das Verstärkungsteil 24 in Wirkungsrichtung der Kraft F' hinter dem Verstellgetriebe 2 angeordnet ist, kann das Verstärkungsteil 24 einer solchen Verformung nicht entgegenwirken. Die mit dem Haltewinkel 5 verbundene obere Verstellschiene und die mit der Spindel 1 verbundene untere, karosseriefeste Schiene können sich so um einen Versatz V zueinander versetzen. Das Verstellgetriebe 2 und der Haltewinkel 5 dienen in diesem Fall als eine Art Knautschzone und nehmen einen Teil der Crash-Energie als Deformationsenergie auf, um auf diese Weise die auf einen Fahrzeuginsassen übertragenen Kräfte zu dämpfen und insbesondere eine abrupte Rückverlagerung eines Fahrzeuginsassen bei einem Heckcrash, die möglicherweise zu einem Schleudertrauma führen könnte, abzuschwächen.

### Bezugszeichenliste

- 1: Spindel
- 2: Verstellgetriebe
- 3: Hybridspindelmutter
- 4: Antriebsschnecke
- 5: Haltewinkel
- 6: Getriebegehäuse
- 7: Funktionsteil
- 8, 8': Festigkeitsteile
- 9, 9': Festigkeitsteile
- 10: Außengewinde der Spindel
- 11: Anlaufscheibe
- 24: Verstärkungsteil
- 240: Schenkel
- 242: Block
- 243: Durchgriffsöffnung
- 244: Aussparung
- 30: Innenverzahnung des Funktionsteils der Hybridspindelmutter
- 31: Außenverzahnung des Funktionsteils der Hybridspindelmutter
- 310: Zahngrund mit konstanter Zahntiefe
- 311: Zahngrund mit abnehmender Zahntiefe
- 312: Endabschnitt ohne Verzahnung
- 32: Zylindrische Mantelfläche
- 33, 34: Stirnfläche
- 40: Schneckengewinde der Antriebsschnecke
- 50: Basis des Haltewinkels
- 51, 52: seitliche Schenkel des Haltewinkels
- 53, 54: Durchgangsöffnungen der seitlichen Schenkel
- 55, 56: Befestigungsflansche des Haltewinkels
- 57, 58: Befestigungsöffnungen der Befestigungsflansche
- 61, 62: Gehäuseschalen des Getriebegehäuses
- 63, 64: Lagerböcke des Getriebegehäuses
- 65, 66: Lagerbohrungen der Lagerböcke
- 67, 68: Bohrungen der Gehäuseschalen
- 70: hohlzylindrischer Grundkörper des Funktionsteils
- 71: napfförmige Vertiefungen
- 72: Flansch
- 73, 75: Vorsprünge
- 74: Nuten
- 76: Lagerbund
- 77: Abstandsrippen
- 80: Innenverzahnung des Festigkeitsteils 8, 8' der Hybridspindelmutter
- 81: zylinderringförmige Vorsprünge des Festigkeitsteils
- 82: Flansch
- 83: zylinderringförmiger Absatz
- 84: Mitnehmer
- 85: Lagerbund
- 90: Innenverzahnung des Festigkeitsteils 9, 9' der Hybridspindelmutter
- 91: Vorsprünge
- 92: Nuten
- a: Abstand der Innenverzahnung des Festigkeitsteils zum Außengewinde der Spindel im Normalbetrieb
- b: Axialer Abstand der Festigkeitsteile vom Funktionsteil
- c: Axialer Abstand der Festigkeitsteile vom Haltewinkel
- A: Abstand
- F, F': Kraft
- H: Zahntiefe
- L: Längsrichtung
- MA, MI: Mittenebene
- R: Radius
- S: Vertikalrichtung
- V: Versatz
- V1, V2: Verzahnungsabschnitt
- X, Y, Z: Länge

## Patentansprüche

1. Spindelantrieb für eine Sitzlängsverstellung eines Kraftfahrzeugsitzes mit
- einer gegenüber einer karosseriefesten Schiene längsverstellbaren Verstellschiene und
- einem Verstellgetriebe (2), das eine mit einer Antriebseinrichtung verbundene Antriebsschnecke (4) und eine Spindelmutter (3), deren Außenverzahnung (31) mit der Außenverzahnung (40) der Antriebsschnecke (4) und deren Innenverzahnung (30) mit dem Außengewinde (10) einer Spindel (1) in Eingriff ist, enthält,
wobei die Spindelmutter durch eine Hybridspindelmutter (3) gebildet ist, die ein im Kraftfluss zwischen der Antriebsschnecke (4) und der Spindel (1) angeordnetes Funktionsteil (7) und mindestens ein Crashkräfte von der Verstellschiene in die Spindel (1) ableitendes Festigkeitsteil (8, 8'; 9, 9') aufweist.
**dadurch gekennzeichnet,**
**dass** das Funktionsteil (7) aus einem hohlzylindrischen Grundkörper (70) mit an mindestens einer Stirnseite angeordneter Vertiefung (71) besteht, in die ein Vorsprung (81) des als Buchse ausgebildeten Festigkeitsteils (8, 8') eingreift, wobei sich an den Vorsprung (81) des Festigkeitsteils (8, 8') ein sich an die Stirnseite des hohlzylindrischen Grundkörpers (70) des Funktionsteils (7) anlegender Flansch (82) anschließt.

2. Spindelgetriebe nach Anspruch 1, **dadurch gekennzeichnet, dass** das Funktionsteil (7) in einem mittleren Bereich der Hybridspindelmutter (3) angeordnet ist und im Kraftfluss zwischen der Antriebsschnecke (4) und der Spindel (1) die Außen- und Innenverzahnung (31, 30) der Hybridspindelmutter (3) enthält.

3. Spindelgetriebe nach mindestens einem der vorangehenden Ansprüche, **dadurch gekennzeichnet, dass** das Festigkeitsteil (8, 8'; 9, 9') eine Innenverzahnung (30') aufweist, deren Zahnflanken von den Zahnflanken des Außengewindes (10) der Spindel (1) derart beabstandet sind, dass im Normalbetrieb nur die Innenverzahnung (30) des Funktionsteils (7) mit dem Außengewinde (10) der Spindel (1) in Eingriff ist.

4. Spindelgetriebe nach mindestens einem der folgenden Ansprüche 1 bis 3, **dadurch gekennzeichnet, dass** das Festigkeitsteil (8, 8'; 9, 9') axial sowohl gegenüber Lagerböcken (63, 64) eines Getriebegehäuses (6) des Verstellgetriebes (2) und/oder seitlichen Schenkeln (51, 52) eines das Getriebegehäuse einfassenden Haltewinkels (5) als auch gegenüber einer axialen Stirnseite des Funktionsteils (7) beabstandet ist und eine Innenverzahnung (80, 90) aufweist, die mit dem Außengewinde (10) der Spindel (1) kämmt.

5. Spindelgetriebe nach Anspruch 3 oder 4, **dadurch gekennzeichnet, dass** das Funktionsteil (7) an der dem Festigkeitsteil (8, 8'; 9, 9') zugewandten Stirnseite mindestens einen in Umfangsrichtung wirksamen Mitnehmer (73, 74, 75) aufweist, der mit einem an der dem Funktionsteil (7) zugewandten Stirnseite des Festigkeitsteils (8, 8'; 9, 9') angeordneten Mitnehmer (84; 91, 92) korrespondiert, derart, dass bei einer über die Antriebsschnecke (4) eingeleiteten Drehbewegung des Funktionsteils (7) das Festigkeitsteil (8, 8'; 9, 9') in der jeweiligen Drehrichtung mitgenommen wird.

6. Spindelgetriebe nach Anspruch 5, **dadurch gekennzeichnet, dass** am Umfang der einander gegenüberstehenden Stirnseiten des Festigkeitsteils (8, 8'; 9, 9') und Funktionsteils (7) mehrere nach Art einer Verzahnung ausgebildete, ineinander greifende Vorsprünge und Nuten (91, 92) als Mitnehmer vorgesehen sind.

7. Spindelgetriebe nach mindestens einem der vorangehenden Ansprüche, **dadurch gekennzeichnet, dass** sich an den Flansch (82) des als Buchse ausgebildeten Festigkeitsteils (8, 8') ein zylinderringförmiger Absatz (83) anschließt.

8. Spindelgetriebe nach mindestens einem der vorangehenden Ansprüche, **dadurch gekennzeichnet, dass** eine Stirnseite des hohlzylindrischen Grundkörpers (70) des Funktionsteils (7) einen radial mit dem Kopfkreis der Außenverzahnung (31) des Funktionsteils (7) bzw. der Hybridspindelmutter (3) bündig abschließenden Flansch (72) aufweist.

9. Spindelgetriebe nach mindestens einem der vorangehenden Ansprüche, **dadurch gekennzeichnet, dass** die mindestens eine als Festigkeitsteil (8, 8') ausgebildete Buchse mit dem hohlzylindrischen Grundkörper (70) des Funktionsteils (7) durch Kleben oder Laserschweißen verbunden ist.

10. Spindelgetriebe nach mindestens einem der vorangehenden Ansprüche, **dadurch gekennzeichnet, dass** das Festigkeitsteil (8, 8'; 9, 9') der Hybridspindelmutter (3) einen hartmetallischen Werkstoff, insbesondere Stahl, enthält oder aus einem hartmetallischen Werkstoff besteht und das Funktionsteil (7) zumindest im Eingriffsbereich der Innen- und Außenverzahnungen (31, 30) aus Kunststoff besteht.

11. Spindelgetriebe nach Anspruch 10, **dadurch gekennzeichnet, dass** das Festigkeitsteil (8, 8'; 9, 9') als Insertteil aus einem mit Kunststoff umspritzten Hartmetallkörper ausgebildet ist.

12. Spindelgetriebe nach mindestens einem der vorangehenden Ansprüche, **dadurch gekennzeichnet, dass** das Funktionsteil (7) aus Kunststoff besteht, der an die mindestens eine als Festigkeitsteil (8, 8') ausgebildete Buchse angespritzt ist.

13. Spindelgetriebe nach mindestens einem der vorangehenden Ansprüche, **dadurch gekennzeichnet, dass** der Grundkörper der Hybridspindelmutter (3) aus einem hohlzylindrischen Körper aus einem metallischen Werkstoff, insbesondere aus Stahl, mit schmalen Zahnflanken als Innengewinde besteht, der innen und zumindest im Bereich des Außengewindes des Funktionsteils mit Kunststoff umspritzt ist.

14. Spindelgetriebe nach mindestens einem der vorangehenden Ansprüche, **dadurch gekennzeichnet, dass** der Grundkörper der Hybridspindelmutter (3) aus zwei hohlzylindrischen Halbschalen aus Metall besteht, die im Bereich der Stirnseiten von zwei als Festigkeitsteil dienenden Hülsen umschlossen sind, und dass ein die Innenund Außenverzahnung (30, 31) der Hybridspindelmutter (3) bildender Kunststoff auf die Innen- und Außenfläche der hohlzylindrischen Halbschalen aufgespritzt ist.

## Claims

1. Spindle drive for longitudinally adjusting a motor vehicle seat with
- an adjustment rail being longitudinally adjustable relative to a body mounted rail and
- an adjusting mechanism (2), which includes a driving worm (4) connected to a driving device and a spindle nut (3), the external toothing (31) thereof engages with the external toothing (40) of the driving worm (4) and the internal toothing (30) thereof engages with the external thread (10) of a spindle (1),
wherein the spindle nut is formed by a hybrid spindle nut (3), which has a functional part (7) arranged in the force flux between the driving worm (4) and the spindle (1) and has at least one strengthening part (8, 8'; 9, 9') deflecting crash forces from the adjustment rail into the spindle (1)
**characterized in that**
the functional part (7) consists of a hollow cylindrical base body (70) with a depression (71) arranged on at least one front face, with which a projection (81) of the strengthening part (8, 8') formed as a bush engages, wherein a flange (82) resting against the front face of the hollow-shaped base body (70) of the functional part (7) is adjacent to the projection (81) of the strengthening part (8, 8').

2. Spindle drive according to claim 1, **characterized in that** the functional part (7) is arranged in an centre area of the hybrid spindle nut (3) and includes in the force flux between the driving worm (4) and the spindle (1) the external and internal toothing (31, 30) of the hybrid spindle nut (3).

3. Spindle drive according to at least anyone of the preceding claims, **characterised in that** the strengthening part (8, 8'; 9, 9') has an internal toothing (30'), the tooth flanks thereof are spaced apart from the tooth flanks of the external thread (10) of the spindle (1) such that by normal operation only the internal toothing (30) of the functional part (7) engages with the external thread (10) of the spindle (1).

4. Spindle drive according to at least anyone of the claims 1 to 3, **characterized in that** the strengthening part (8, 8'; 9, 9') is spaced apart axially from the bearing blocks (63, 64) of a transmission housing (6) of the adjusting mechanism (2) and/or lateral arms (51, 52) of a holding bracket (5) surrounding the transmission housing as well from an axial front face of the functional part (7) and has an internal toothing (80, 90), which meshes with the external thread (10) of the spindle (1).

5. Spindle drive according to claim 3 or 4, **characterized in that** the functional part (7) on its front face facing the strengthening part (8, 8'; 9, 9') has at least one carrier (73, 74, 75) being effective in circumferential direction, wherein said carrier corresponds to a carrier (84; 91, 92) arranged at the front face of the strengthening part (8, 8'; 9, 9') facing the functional part (7) such that in case of a rotational movement of the functional part (7) introduced via the driving worm (4) the strengthening part (8, 8'; 9, 9') is picked up in the respective rotational direction.

6. Spindle drive according to claim 5, **characterized in that** on the circumference of the front faces of the strengthening part (8, 8'; 9, 9') facing each other and the functional part (7) multiple projections and slots (91, 92) formed according to a toothing and engaging with each other are provided as carrier.

7. Spindle drive according to at least anyone of the preceding claims, **characterized in that** a cylindering-shaped offset (83) is adjacent to the flange (82) of the strengthening part (8, 8') formed as a bush.

8. Spindle drive according to at least anyone of the preceding claims, **characterized in that** a front face of the hollow cylindrical base body (70) of the functional part (7) comprises a radial flange (72) being flush with the top circle of the external toothing (31) of the functional part (7) or the hybrid spindle nut (3).

9. Spindle drive according to at least anyone of the preceding claims, **characterized in that** the at least one bush formed as strengthening part (8, 8') is connected to the hollow cylindrical base body (70) of the functional part (7) by gluing or laser welding.

10. Spindle drive according to at least anyone of the preceding claims, **characterized in that** the strengthening part (8, 8'; 9, 9') of the hybrid spindle nut (3) contains a hard metallic material, in particular steel, or consists of a hard metallic material and the functional part (7) consists of plastic at least in the engagement area of the internal and external toothing (31, 30).

11. Spindle drive according to claim 10, **characterized in that** the strengthening part (8, 8'; 9, 9') is formed as an insert part of a hard metal body overmoulded with plastic.

12. Spindle drive according to at least anyone of the preceding claims, **characterized in that** the functional part (7) consists of plastic, which is overmoulded to the at least one bush formed as a strengthening part (8, 8').

13. Spindle drive according to at least anyone of the preceding claims, **characterized in that** the base body of the hybrid spindle nut (3) consists of a hollow cylindrical body of a metallic material, in particular of steel, with slim tooth flanks as internal thread, which is overmoulded with plastic internally and at least in the area of the external thread of the functional part.

14. Spindle drive according to at least anyone of the preceding claims, **characterized in that** the base body of the hybrid spindle nut (3) consists of two hollow cylindrical half shells of metal, which are enclosed in the area of the front faces by two sleeves serving as strengthening part, and that a plastic forming the internal and external toothing (30, 31) of the hybrid spindle nut (3) is overmoulded to the internal and external faces of the hollow cylindrical half shells.

## Revendications

1. Dispositif d'entraînement de broche pour le réglage longitudinal d'un siège de véhicule avec
- un rail de réglage réglable longitudinalement par rapport à un rail solidaire de la carrosserie et
- un engrenage de réglage (2) qui comprend une vis sans fin d'entraînement (4) reliée à un dispositif d'entraînement et un écrou de broche (3), dont la denture externe (31) s'engrène avec la denture externe (40) de la vis sans fin d'entraînement (4) et dont la denture interne (30) s'engrène avec le filetage externe (10) d'une broche (1), l'écrou de broche étant constitué d'un écrou de broche hybride (3), qui comprend une partie fonctionnelle (7) disposée dans le flux de force entre la vis sans fin d'entraînement (4) et la broche (1) et au moins une partie résistante (8, 8' ; 9, 9') déviant les forces d'écrasement du rail de réglage vers la broche (1),
**caractérisé en ce que**
la partie fonctionnelle (7) est constituée d'un corps de base cylindrique creux (70) avec une cavité (71) disposée au niveau d'au moins une face frontale, dans laquelle s'emboîte une saillie (81) de la partie résistante (8, 8') conçue comme une douille, une bride (82) s'appuyant contre la face frontale du corps de base cylindrique creux (70) de la partie fonctionnelle (7) se trouvant dans le prolongement de la saillie (81) de la partie résistante (8, 8').

2. Transmission à broche selon la revendication 1, **caractérisée en ce que** la partie fonctionnelle (7) est disposée dans une zone centrale de l'écrou de broche hybride (3) et comprend, dans le flux de force entre la vis sans fin d'entraînement (4) et la broche (1), la denture externe et la denture interne (31, 30) de l'écrou de broche hybride (3).

3. Transmission à broche selon au moins l'une des revendications précédentes, **caractérisée en ce que** la partie résistante (8, 8' ; 9, 9') présente une denture interne (30') dont les flancs des dents sont disposés à une distance des flancs des dents du filetage externe (10) de la broche (1) de façon à ce que, en fonctionnement normal, seule la denture interne (30) de la partie fonctionnelle (7) s'engrène avec la denture externe (10) de la broche (1).

4. Transmission à broche selon au moins l'une des revendications suivantes 1 à 3, **caractérisée en ce que** la partie résistante (8, 8' ; 9, 9') est située à une certaine distance axiale par rapport à des supports de paliers (63, 64) d'un boîtier de transmission (6) de l'engrenage de réglage (2) et/ou à des montants latéraux (51, 52) d'un angle de maintien (5) encadrant le boîtier de transmission ainsi que par rapport à une face frontale de la partie fonctionnelle (7) et comprend une denture interne (80, 90) qui s'engrène avec le filetage externe (10) de la broche (1).

5. Transmission à broche selon la revendication 3 ou 4, **caractérisée en ce que** la partie fonctionnelle (7) comprend, au niveau de la face frontale orientée vers la partie résistante (8, 8' ; 9, 9'), au moins un taquet d'entraînement (73, 74, 75) agissant dans la direction périphérique, qui correspond à un taquet d'entraînement (84 ; 91, 92) disposé sur la face frontale de la partie résistante (8, 8' ; 9, 9') orientée vers la partie fonctionnelle (7), de façon à ce que, lors d'un mouvement de rotation de la partie fonctionnelle (7), initié par l'intermédiaire de la vis sans fin d'entraînement (4), la partie résistante (8, 8' ; 9, 9') soit entraînée dans le sens de rotation correspondant.

6. Transmission à broche selon la revendication 5, **caractérisée en ce que**, sur la périphérie des faces frontales opposées de la partie résistante (8, 8' ; 9, 9') et de la partie fonctionnelle (7), sont prévues des saillies s'engrenant les unes avec les autres à la manière d'une denture et des rainures (91, 92) en tant que taquets d'entraînement.

7. Transmission à broche selon au moins l'une des revendications précédentes, **caractérisée en ce qu'**un épaulement (83), ayant la forme d'une bague cylindrique, se raccorde à la bride (82) de la partie résistante (8, 8') conçue comme une douille.

8. Transmission à broche selon au moins l'une des revendications précédentes, **caractérisée en ce qu'**une face frontale du corps de base cylindrique creux (70) de la partie fonctionnelle (7) comprend une bride (72) alignée radialement avec le cercle de tête de la denture externe (31) de la partie fonctionnelle (7) ou de l'écrou de broche hybride (3).

9. Transmission à broche selon au moins l'une des revendications précédentes, **caractérisée en ce que** l'au moins une douille conçue comme une partie résistante (8, 8') est reliée avec le corps de base cylindrique creux (70) de la partie fonctionnelle (7) par collage ou soudure au laser.

10. Transmission à broche selon au moins l'une des revendications précédentes, **caractérisée en ce que** la partie résistante (8, 8' ; 9, 9') de l'écrou de broche hybride (3) contient un matériau métallique dur, plus particulièrement de l'acier ou est constitué d'un matériau métallique dur et la partie fonctionnelle (7) est constituée d'une matière plastique au moins dans la zone d'engrènement des dentures interne et externe (31, 30).

11. Transmission à broche selon la revendication 10, **caractérisée en ce que** la partie résistante (8, 8' ; 9, 9') est conçue comme un insert constitué d'un corps en métal dur surmoulé avec une matière plastique.

12. Transmission à broche selon au moins l'une des revendications précédentes, **caractérisée en ce que** la partie fonctionnelle (7) est constituée de matière plastique, qui est moulée sur l'au moins une douille conçue comme une partie résistante (8, 8').

13. Transmission à broche selon au moins l'une des revendications précédentes, **caractérisée en ce que** le corps de base de l'écrou de broche hybride (3) est constitué d'un corps cylindrique creux en matériau métallique, plus particulièrement d'acier, avec des flancs de dents étroits en tant que filetage interne, qui est surmoulé à l'intérieur et au moins au niveau du filetage externe de la partie fonctionnelle avec une matière plastique.

14. Transmission à broche selon au moins l'une des revendications précédentes, **caractérisée en ce que** le corps de base de l'écrou de broche hybride (3) est constitué de deux demi-coques cylindriques creuses en métal, qui sont entourées, au niveau des faces frontales, par deux manchons servant de parties résistantes et **en ce qu'**une matière plastique constituant la denture interne et la denture externe (30, 31) de l'écrou de broche hybride (3) est injectée sur la surface interne et la surface externe des demi-coques cylindriques creuses.
